Europäisches Patentamt

European Patent Office

Office européen des brevets

(19)

(11) Publication number: **0 232 807**

**A1**

## (12) EUROPEAN PATENT APPLICATION

(21) Application number: 87101245.6

(22) Date of filing: 29.01.87

(51) Int. Cl.⁴: **G06F 15/46** , G05B 9/03 , G06F 11/20

(30) Priority: 01.02.86 DE 3603142

(43) Date of publication of application:
**19.08.87 Bulletin 87/34**

(84) Designated Contracting States:
**AT BE CH DE FR GB IT LI NL SE**

(71) Applicant: **Degussa Aktiengesellschaft
Weissfrauenstrasse 9
D-6000 Frankfurt am Main 1(DE)**

(72) Inventor: **Dewaele, Wilfried
Groenstraat 33
B-9070 Wachtebeke(BE)**
Inventor: **Hentschel, Klaus, Dr.
Fuldaerstrasse 26
D-6458 Rodenbach(DE)**

(74) Representative: **Sternagel, Hans-Günther, Dr.
et al
Patentanwälte Dr. Michael Hann Dr. H.-G.
Sternagel Sander Aue 30
D-5060 Bergisch Gladbach 2(DE)**

(54) **Apparatus and method for controlling chemical and physical processes in a plurality of devices suitable for this purpose.**

(57) Apparatus and method for controlling chemical and physical processes in a plurality of devices suitable for this purpose which are provided with measuring probes for parameters and actuators for adjusting predetermined parameters, the measuring probes and the actuators being connected to operating/processing units which have a programmable computer system, and a plurality of measuring probes and actuators of a plurality of devices being connected to conversion facilities (13), wherein each conversion unit (13) is connected to at least one allocation unit (6) via a primary transmission channel (12), this allocation unit having a primary memory (8) with a plurality of storage elements and several secondary memories (7) with in each case a plurality of storage elements and each storage element of the primary memory (8) is electrically optionally connected to each storage element of a secondary memory (7), and the secondary memories (7) are connected via secondary transmission channels (4) to in each case one of several operating/processing units (1) so that any secondary memories (7) can be connected to an arbitrarily selectable operating/processing unit (1).

In the method, different control state programs are entered in the programmable computer system of each operating unit and a sufficiently safe operation is ensured or shutdown processes are triggered by a particular method of proceeding in the event of disturbances in the system.

# APPARATUS AND METHOD FOR CONTROLLING CHEMICAL AND PHYSICAL PROCESSES IN A PLURALITY OF DEVICES SUITABLE FOR THIS PURPOSE

Description of the invention:

The subject-matter of the invention is an apparatus and a method for controlling and monitoring chemical and physical processes in a plurality of devices suitable for this purpose.

In chemical industry, particularly at a semi-industrial scale, there are so-called multi-purpose plants which have devices for different physical and chemical processes. These include, for example, storage tanks, agitator vessels, reactors of different shape, distillation columns, extraction facilities, separators, filter systems, drying facilities, mixing facilities which are connected to one another by connecting lines in which pumps or other conveying facilities can also be provided, under certain circumstances. Depending on which of the individual devices are needed for producing or refining a product, it is necessary to connect the measuring probes and actuators of the devices needed to an operating/processing unit. To utilize the capacity of the plurality of devices, it is desirable to have several different processes and transformations running at the same time in the overall plant. To make this possible, several operating/processing units are disposed. If particular devices are permanently connected to particular operating/processing units, the flexibility of the multi-purpose plants is not adequate because particular processes must then be monitored and controlled, under certain circumstances, from several operating/processing units. The required degree of reliability and the desired efficiency cannot be achieved by means of a conventional decentralized operation or even local operation.

On the other hand, conventional centralized operation would require a very large control room in which the operating personnel would greatly impede each other.

For reasons of flexibility in utilizing such plants, it is desirable to be able to connect any different combinations of devices to any operating/control unit, depending on requirements, to record the signals of the measuring probes of all devices connected in the individual case on an operating/processing unit and to transmit the control signals resulting from this for the control of the sequences to the controlling facilities of the individual devices.

The invention has the object of creating a flexible control apparatus which makes it possible to connect any combinations of devices to one or more operating/processing units in each case without continuously altering cable connections, and to design the system in such a manner that it is possible to control the processes of chemical transformations and physical processes occurring simultaneously in the devices in a manner meeting the requirements for operational reliability and availability. The desired apparatus can also be called a flexible wiring/connection of measuring probes and actuators of a plurality of devices to a group of operating/processing units.

This object is achieved by a multiplexer in the form of an apparatus for controlling chemical and physical processes in a plurality of devices suitable for this purpose which are provided with measuring probes for parameters and actuators for adjusting predetermined parameters, the measuring probes and actuators being connected to operating/processing units which have a programmable computer system. The apparatus comprises a plurality of measuring probes and actuators connected to a plurality of devices having conversion facilities, each conversion facility being connected via a primary transmission channel to at least one allocation unit, which allocation unit has a primary memory and several secondary memories, and each storage element of the primary memory being electrically optionally connected to each storage element of a secondary memory, and the secondary memories being connected via secondary transmission channels to one of several operating/processing units in each case so that arbitrary secondary memories can be connected to an arbitrarily selectable operating/processing unit.

A permanent connection of all measuring probes and controlling facilities of all devices to groups of conversion units exists. All connections of a device or several devices being directly functionally connected to each other and, as a rule, used together are allocated to one conversion unit and are connected thereto. Apart from electrical wiring, pneumatic or hydraulic connections between the measuring probes or the control facilities and the conversion facilities are also possible.

These conversion facilities are devices which convert signals (preferably analog signals) coming from measuring probes into digital signals and/or convert digital signals into corresponding actuating signals for the actuators. They have inputs and outputs for measuring signals and actuating signals and converting elements, so-called digital/analog converters, analog/digital converters and memories for signals in digital form which are capable of transmitting stored data, after conversion into actuating signals, to actuators.

The conversion units have in each case a function monitoring facility which indicates a disturbance within the conversion facility and/or the connection to the allocation units, still to be described. When a function monitoring facility responds due to failure of the data transmission from the allocation unit or due to a disturbance within the conversion unit, the function monitoring facility also triggers in each case a change of the control state program to the program of process interruption and, when particular predetermined limit values are exceeded, the emergency shutdown of the devices connected.

This is made possible by the fact that the function monitoring facility is a programmable computer with memory, which serves as fault monitoring unit for detecting and, if necessary, eliminating faults which arise during operation, faults generally being a deviation from go conditions. The computer is programmed in such a manner that, when the function monitoring facility responds, a process interruption of the current processes in the devices takes place and during emergency shutdown all processes are returned to a safe level from which no risk to the plant or to the environment can emanate.

From these conversion facilities, flexible and selectable connections to one of several operating/processing units are constructed.

Operating/processing units are apparatuses with equipment for indicating and changing parameters which accommodate control facilities for processing measuring data and setpoints, the processing including the receiving of measuring data, comparing with setpoints, converting and outputting of control signals and computations for changed setpoints.

Expressed more generally, when the data are processed they are mathematically linked. For this purpose, the operating/processing units each have a programmable computer system.

Three different control state programs can be entered into the computer system. These are:

a) the normal process sequence program,

b) a program of the so-called stable balanced state in which each device used in the process concerned is brought to a reversible stable state from which a direct continuation of the process sequence is possible without material losses but can be maintained in a balanced state for any length of time and excludes risk to the plant and to the contents, and

c) a so-called safety or emergency shutdown program in which all individual devices are brought to a safe state which can be irreversible, for example by emptying with loss of material. A continuation of the process from this program state is possible only after manual interventions in the plant, faults and disturbance sources first having to be eliminated if necessary.

Apart from the computer system, the operating/processing units can also have a programmable element which is independent thereof and into which two different control state programs can be entered.

The operating/processing units each have a function monitoring facility which is constructed in constructed in such a manner that it can indicate not only a disturbance within the operating/processing unit but also a disturbance in the data transmission via the secondary transmission channels, described later. These monitoring facilities are also programmable computers with memories which trigger switch-over processes within the operating/processing unit or separation of the disturbed unit from the secondary transmission channels, still to be described.

If the operating/processing unit has an independent programmable element, the disturbance in the form of a failure of the programmable computer system is brought by the function monitoring facility to the element in connection with the secondary tranmission channels and the process is monitored and controlled by this element until a free operable operating/processing unit is activated and the corresponding control programs are entered by intervention of the operating personnel so that further guidance of the process can take place from the new unit.

To construct the flexible connection between the conversion units and the operating/processing units, the conversion facilities are connected via primary transmission channels to at least one allocation unit. In a preferred embodiment of the invention, 2 and, if necessary, also more allocation units disposed in parallel with each other are provided which are constructed to be optionally connectable to the conversion facilities via the primary transmission channels. This means that the primary transmission channels coming in each case from the conversion units can be optionally connected to one or the other allocation unit, a change of connections being triggered by a switch-over process. In another embodiment of the connection of the conversion facilities to two allocation units, disposed in parallel with each other, via primary transmission channels, two allocation units are in each case permanently connected to each of the conversion facilities so that, when an active allocation unit is changed to a second allocation unit disposed in parallel, no switch-over process is required in the area of the primary transmission channels.

An allocation unit has a primary memory having a plurality of storage elements and several secondary memories having in each case a plurality of storage elements. The connection of the primary memory to the secondary memories within an allocation unit is effected as a matrix connection in each case via a programmable element which can be, for example, a computer or a matrix computer. However, so-called micro-chips can also be used as programmable elements. This programmable element or the elements of the matrix are used for allocating and connecting the storage elements of the primary memory to the storage elements of one secondary memory in each case. The data coming from the conversion facilities are stored as a primary database in the storage elements like the data transmitted from the secondary memories to the storage elements of the primary memory. The current values of all process signals are available in the primary database, that is to say the storage elements.

The number of secondary memories within an allocation unit corresponds to the number of chemical and physical processes which can be simultaneously operated independently of each other, in which arrangement one process can also have several chemical and physical events, that is to say individual process steps. Each secondary memory has a plurality of storage elements. The programmable element, which establishes an electrical connection between the storage elements of the primary memory and the storage elements of the secondary memory, makes it possible to connect each storage element of the primary memory to each storage element of the secondary memories. The selection of the connection of the storage elements of the primary memory to those of the secondary memories is effected by means of the programmable element which can be a computer. In each case one secondary memory contains all signals for a process. A secondary database is built up in the secondary memories due to the flexible arrangement implemented by software. In a preferred embodiment, it is possible to enter and store two different control state programs, which can be switched to the secondary memories, in the storage elements of the secondary memories or of the programmable element associated in each case or of another programmable element. The program which keeps a process in a stable balanced state, from which a return to the normal process sequence program is possible, for each processstate in time of this process, and an interruption/emergency shutdown program are preferably entered. The secondary memories of the allocation unit are connected via secondary transmission channels to the operating/processing units. Apart from a through connection from the secondary transmission channels to the secondary memories, the programmable element of the secondary memories can also effect the entering of control state programs which, in the case of demand, supply the primary database and the primary transmission channels with the data required for process control.

In addition to a function monitoring facility of each complete allocation unit, each secondary memory also has a function monitoring facility which indicates a disturbance in the connection between secondary memory and the associated operating/processing unit and/or the connection to the primary memory. When this function monitoring facility of a secondary memory responds, a switch-over process is triggered which effects a change of the allocation unit to a spare unit, disposed in parallel, when no further free secondary memory is available within the first allocation unit during the accute operating state or a change to a free undisturbed secondary memory within the allocation unit is not possible. This is the case when a free secondary memory is still available within an allocation unit when a secondary memory and the associated disturbed programmable element are disturbed. In this case, the connections of the disturbed memory to the secondary transmission channel and to the primary memory disposed in the allocation unit are separated by a switch-over process and in each case a connection is established between the secondary transmission channel and the primary memory and a free secondary memory of the same allocation unit. To achieve full functional capability, the control program stored in the computer system of the operating/processing unit connected via the secondary transmission channel, for the control state of the stable balanced state and the interruption program, are stored in the programmable element of the secondary memory now connected in this embodiment.

The secondary memories of the alllocation unit are connected to operating/processing units via secondary transmission channels. The number of existing operating/processing units in the apparatus corresponds to the number of secondary memories of an allocation unit and, in addition, another operating/processing unit is available as standby unit. The secondary transmission channels are constructed in such a manner that any operating/processing unit can be connected to any secondary memory by means of a transmission channel.

In a preferred embodiment of the invention the secondary transmission channels include a switch-over facility which establishes a connection between the secondary memories of the first allocation unit and selectable operating/processing units or enables the connections of the secondary trans-

mission channels to be changed from an allocation unit to a second allocation unit. This switch-over facility is a combination of a plurality of switches which can be mechanical switches, electronic switches or a programmable computer which acts on the transmission channels.

In the case of two allocation units disposed in parallel with each other, these are constructed to be optionally connectable to the operating/processing units, the connection being effected via secondary transmission channels.

Both the function monitoring facility of the allocation unit and that of the secondary memories indicates a disturbance in the connection between secondary memory and the operating/processing unit associated in each case.

The function monitoring facilities of the operating/processing units are also constructed in such a manner that they can indicate not only a disturbance within the operating/processing unit but also a disturbance in the data transmission via the secondary transmission channels. These monitoring facilities are also programmable computers with memory.

In the event of a failure of the data transmission from an operating/processing unit to the connected secondary memory, the through connection from the secondary transmission channel to the secondary memory is separated by a switch-over process, and a connection from the control program entered in an associated programmable element of the secondary memory to the associated storage element of a primary memory is established and, at the same time, a change from the control state program to that of the stable balanced state is triggered. This process, safeguarding the functional capability of the apparatus according to the invention, can be triggered both by the function monitoring facility of an operating/processing unit and by the function monitoring facility of a secondary memory. This mandatory change of the control state to a different level has the advantage that the running process is interrupted cr changed only to the extent that a stable balanced state is reached, from which a return to the normal process sequence program is still possible.

The fact that the number of operating/processing units is higher by one than that of secondary memories ensures that, even in the case of complete utilization of the capacity of the total system, that is to say use of all secondary memories, a free unit from which the further sequence can be controlled is still available in the event of a failure of an oparating/processing unit. The probability of a failure of mcre than one operating/processing unit of a group of, for example, 7 units with a simultaneously existing requirement for 6 units for process control is so low that one operating/processing unit is adequate as standby.

To be able to compensate for the failure of the control of one or more secondary memories of an allocation unit, which would result in an interruption or disturbance of the electrical connection between the operating/processing unit and the primary transmission channels to the conversion facilities and the respective devices, at least two allocation units are available, as already stated. As a rule, a higher number is not required and would only unnecessarily increase the cost of the apparatus according to the invention.

The flexible allocation of operating/processing units to conversion facilities in the apparatus according to the invention makes it possible to switch any combinations of devices to one operating/processing unit in each case and to monitor and control the intended processes and transformations from this unit.

Compared with the arrangement of an additional programmable element in each operating/processing unit which is independent from the computer system of an operating/processing unit, the embodiment with control state programs for the stable balanced state and the emergency shutdown program stored in the secondary memories of the allocation units has the advantage of increased safety in the event of a disturbance within the operating/processing unit or the connection of the secondary transmission channels and provides more time for activating a standby operating/processing unit by the personnel.

However, the invention also includes a safety method by means of which a partial failure of the apparatus can be compensated by switch-over processes and in which, if necessary, operation of the individual devices is continued by automatic switch-over to preprogrammed control programs in such a manner that damage is prevented.

In this method according to the invention for controlling chemical and physical processes in a plurality of devices suitable for this purpose, signals emitted by measuring probes are transmitted by transmission channels to operating/processing units, compared in the computer system of the operating/processing units with predetermined setpoint programs and control commands resulting from the deviation or from subsequent program steps are transmitted through transmission channels to the actuators of the devices connected, in such arrangement different control state programs for the sequence program, desired in each case, of the chemical and/or physical events, namely

    a) the normal process sequence program,

b) a stable balanced state, from which a return to the normal process sequence program is possible, for each process state in time in the process, and

c) an interruption/emergency shutdown program are entered in the programmable computer system of each operating/processing unit. The characterizing feature of this method consists in the fact that the programs for the control state of the stable balanced state, stored in the programmable computer system of an operating/processing unit, and the interruption program are entered and stored in a programmable element, independent of the computer system, and that a connection of the independent, programmable element to the associated memory element of a primary memory is established by means of a conversion process when a function monitoring facility of an operating/processing unit responds with indication of a failure of the computer system of this operating/processing unit, or of a failure in data transmission by this operating/processing unit, and a change of the control state from the normal process state into that of the stable balanced state is triggered by the independent programmable element and the required control signals are supplied to the actuators and, in the case of response of the function monitoring facility of a secondary measuring or of the allocation unit, the connections of the allocation unit to the secondary transmission channels into the primary transmission channels leading to the conversion facilities are disconnected and a connection is established between a second allocation unit and the corresponding primary transmission channels and secondary transmission channels by a switch-over process, or the connections between a disturbed secondary memory and the associated, possibly disturbed programmable element and the secondary transmission channel and the primary memory disposed in the allocation unit are separated by a switch-over process and in each case a connection is established between the secondary transmission channel and the primary memory and a free secondary memory of the same allocation unit, and the program for the control state of the stable balanced state and the interruption program, stored in the computer system of the operation/processing unit connected via the secondary transmission channel are stored in the associated independent programmable element, a change of the control state program to the program of the process interruption and the emergency shutdown of the connected devices is effected when the function monitoring facility of a conversion facility connected to the primary memory via a primary transmission channel responds and the data transmission from the associated memory element of the primary memory to the conversion facility fails due to a switch-over process in the conversion facility.

The independent programmable element can be disposed both in an operating/processing unit and in the secondary memories of the allocation unit. The latter is preferred so that, in this case, the programs for the control state of the stable balanced state, stored in the programmable computer system of an operating/processing unit, and the interruption program are stored via secondary transmission channels in the programmable element of a connected secondary memory disposed in the allocation unit and, in the event of the failure of data transmission from an operating/processing unit to the connected secondary memory, the through connection from the secondary transmission channel to the secondary memory is separated by a switch-over process and a connection from the control states entered in an associated programmable element of the secondary memory to the associated storage element of a primary memory is established and a change of the control state to that of the stable balanced state is triggered and the required control commands are issued to the conversion facilities.

So that relatively complex transformation reactions and processes can also be reliably and reproduceably controlled in the devices, three different control state programs can be entered into the apparatus. The first state is the normal sequence of the desired chemical and/or physical transformation in the devices connected to the operating/processing unit by the control and communication system according to the invention. In this arrangement, control commands are conducted to the control facilities of the devices by the process program programmed in, physical or chemical measurement values supplied by measuring probes to the devices are recorded, conducted via the communication system according to the invention to the operating/processing unit and compared with the stored setpoints and, in case of deviations, control commands are passed on to the control elements of the devices.

The second control state which can be entered is a stopping of the process sequence at any time in the process and setting-up and maintaining a stable balanced state (standby state) from which a continuation of the normal process is possible at any time by returning to the first control state program of the normal process sequence. Transition from the normal process program sequence to the first safety level of an interrupted normal process sequence and setting-up a stable balanced state does not exclude that process parameters are reversibly changed, for example for creating this state. This can be a lowering of temperatures or a changing of pressure in the devices which can be cancelled again when returning into the normal process sequence program. The decisive factor providing the distinction between the normal process sequence program and the stable balanced state is that the balanced state can be kept indefinitely stable and it is possible to return again to the normal process sequence. Stopping the normal program sequence of the desired transformation in a so-called standby state has the advantage that irreversible losses in the individual devices are avoided in each process state and a continuation of the normal work program is possible after the disturbance in the apparatus according to the invention has been eliminated.

The third control state which can be programmed in is the irreversible interruption of the process sequence in the devices with a safety and emergency shutdown process from which it is not easily possible to return to the normal operating sequence. For safety reasons, such an emergency or safety shutdown program is now normal for chemical and physical processes. Such an automatic pre-programmed safety shutdown program is based on monitoring the critical parameters in the devices. If the values exceed or drop below the limit values preset for the critical parameters so that a running away of the reactions or other undesired, no longer controllable effects occur, a shutdown program for the connected devices automatically proceeds to a safe stable final state. Chemical and/or physical transformations are terminated, temperatures and pressure are changed to stable values. If required, neutralizing auxiliary agents are introduced or the device contents are emptied into tanks or the like provided for the purpose. As a rule, this is connected with material losses but damage to the plants and environmental contamination is avoided. After appropriate manual interventions and, if necessary, cleaning work in the individual devices, these are available again for further transformations.

Such a control system with three programmable levels of control states corresponds to the currently customary standard of control systems of plants with permanently connected operating units.

The special advantage of the method according to the invention of the process control in the event of disturbances in the process control system consists in the fact that, in the event of a failure of an operating/processing unit or of the data transmission from it to the allocation unit, the switching-on of an independent programmable element in which safety programs are already stored provides adequate time for the personnel to activate a free operating/processing unit or the standby unit and to enter the required desired process data without an irreversible interruption of the normal process sequence being necessary. The running process to be controlled in the devices connected is only transferred into the reversible stable balanced state and can again be returned to the level of the normal process sequence from the activated operating/processing unit.

The development according to the invention of the apparatus transfers the safety requirements to the system with the flexible wiring. In contrast to permanently wired operating units, the apparatus according to the invention requires an additional operating unit only for one group of operating units. In the event of a failure or of a disturbance in the area of this operating unit during a normal process sequence in the devices, non-reversible interventions into the process sequence in the devices are avoided during the phase of switching over to the standby operating/processing unit. This is made possible by the fact that the programmable elements contained in the allocation unit contain the required control state programs which then appropriately act on the conversion facilities, as already previously described.

This operation according to the invention of the apparatus for controlling fulfils the safety requirements for chemical and/or physical processes in corresponding devices. Compared with the known systems, it requires less equipment expenditure without losses of safety and increase of risk.

The invention will now be explained in greater detail with the aid of the drawings.

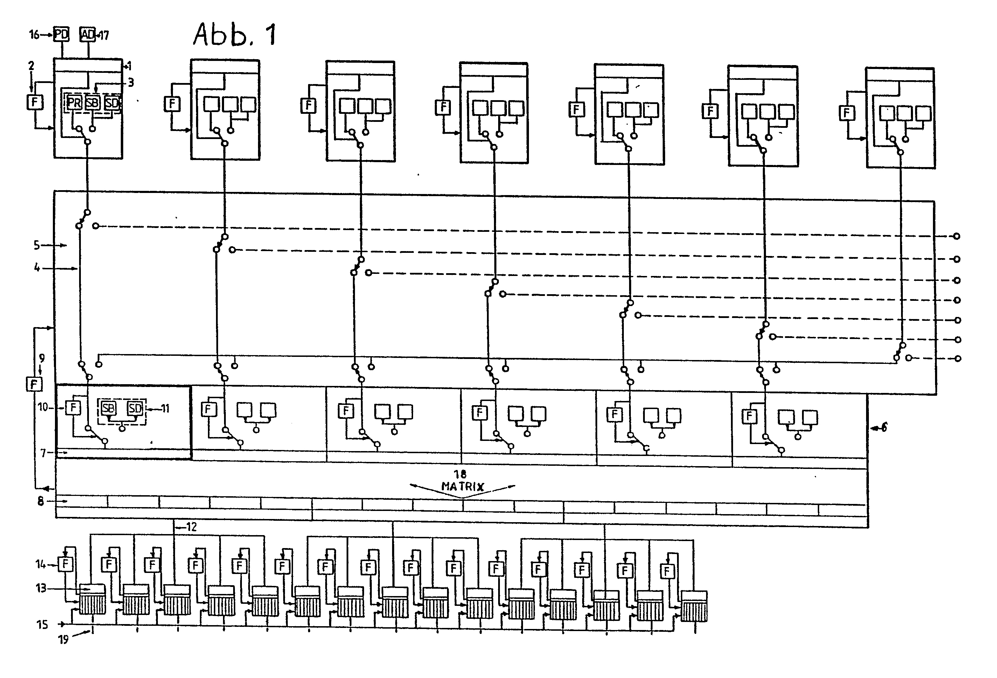

Figure 1 shows a circuit diagram of an embodiment according to the invention of the apparatus. In the top row, six operating/processing units 1 and a standby unit are shown. Each operating/processing unit 1 contains a programmable computer system 3 into which three control state programs can be entered. These are shown diagrammatically by means of the three small boxes. The left-hand small box is the memory for the normal process run (PR), the center small box is the program for the stable balanced state (SB) and the right-hand small box symbolises the safety shutdown program (SD). It is possible at any time to switch over from the normal process sequence program to the program of the stable balanced state by manual intervention. The function monitoring facility 2 is symbolically reproduced outside the block diagram of each operating/processing unit.

Below this, the secondary transmission channels 4 are symbolically reproduced and are connected via switches to one operating/processing unit each. In this illustrative embodiment, a switch is reproduced at the lower end of each of the secondary transmission channels which enables each individual operating/processing unit to be switched over to the standby unit.

The secondary transmission channels 4 include a switch-over facility 5 by means of which the switching-over processes can be carried out.

The secondary transmission channels are connected to the allocation unit 6 shown underneath them, which has secondary memories 7, a programmable element (matrix) 18 and a primary memory 8. Above the secondary memories 7, the programmable element 11, into which two control state programs can be entered, belonging to each secondary memory, is symbolically shown in each case. Similarly, the through connection from the secondary transmission channel to the secondary memory is shown.

Each secondary memory 7 is provided with a function monitoring facility 10. The allocation unit 6, as a whole, also has a function monitoring facility 9. The primary memories 8 are shown in the allocation unit at the bottom edge. The connection of the individual storage elements of the primary memory 8 to the secondary memories can be selected via a programmable element 18 and is symbolically shown as a matrix connection. The primary memory 8 is connected via primary transmission channels 12 to the conversion facilities 13. These are reproduced adjacently to each other as groups in the lower portion of the figure. Each of these conversion facilities 13 is provided with a function monitoring facility 14.

A global manual emergency-off facility (15) is symbolically shown for all conversion units.

The connecting permanent connection of the conversion facility to the individual devices is symbolically shown in Figure 1 by an input/output line - (19).

The switching-over capability of the secondary transmission channels 4 of the switch-over facility 5 to a parallel allocation unit 6 is reproduced with dashed lines in the switch-over facility 5.

The log printer and alarm printer allocated to each operating/processing unit is shown symbolically only for one operating/processing unit as PD 16 and AD 17.

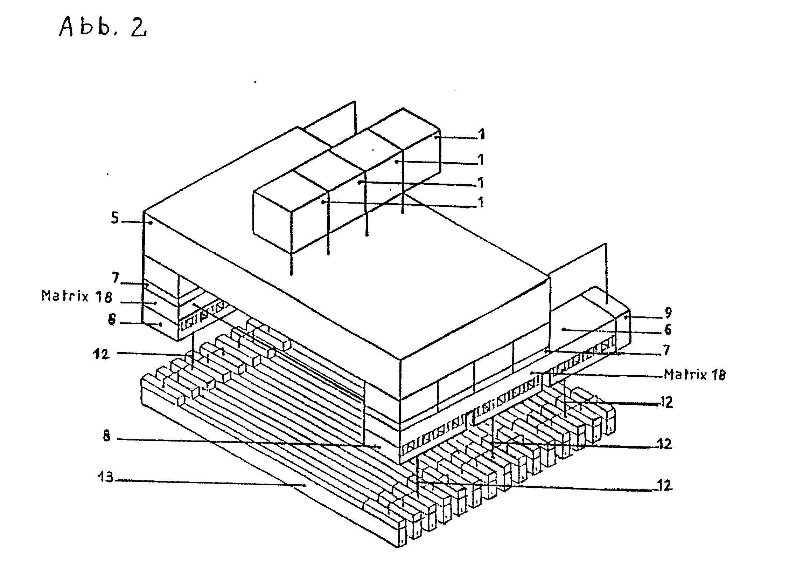

Figure 2 again shows the flexible linkage within an apparatus according to the invention diagrammatically, in a different representation. At the top, the operating/processing units 1 are symbolically reproduced but only a total of four, one of which is used as standby unit.

Below this, the switch-over facility 5 with the secondary transmission channels contained therein is disposed. The switch-over facility 5 is connected to two allocation units 6 disposed in parallel, which in each case have several secondary memories 7 with programmable elements 11 and the primary memory 8. The connection between the primary memory 8 and the secondary memories 7 is made via a matrix (18) which enables storage elements of the primary memory being arbitrarily allocated to storage elements of a secondary memory. The primary memories 8 of the two parallel allocation units 6 are permanently connected to the conversion facilities 13 via primary transmission channels 12.

The invention will now be explained in greater detail with the aid of an example.

The flexible process automation system (F PAS) is an apparatus which has three levels.

The lowest level has conversion facilities, in which the signals coming from the permanently connected devices, in which chemical and/or physical processes or reactions take place, and picked up by measuring probes, and the output signals to actuators of the control facilities of the devices, are converted. For this purpose, System 86 by Oxford Automation is used. The input/output cards and the conversion of signals at this level do not differ from other known systems.

In the so-called conversion units (remote units - (RU)), 16 input/output compartments are available, which are processed by a local central processing unit (CPU). The medium level is an allocation unit in the form of a signal matrix system (MK) in which the digitised process signals are allocated to appropriate operating/processing units with the aid of computer programs and in dependence on a particular device configuration for a particular chemical and/or physical sequence of events (process sequence). A multi-bus system with the 8086 CPU by Intel has been found to be a suitable matrix computer. An 8086 card emulates the interface of 2 PMS 20's.

The lowest level is connected to the medium level via primary transmission channels, which are a field bus interface. In this arrangement, five conversion units are in each case connected to one transmission channel and there is a total of three primary transmission channels. A very high, effective data transmission rate is achieved. One entire transfer cycle, including conversion, results in an effective transmission of 750 analog values per second in 5 Ru.

The medium-level allocation unit has a primary memory which is connected to the primary transmission channels. Up to 68 conversion units can be in contact with the primary memory via the primary transmission channels and can accept signals and/or supply signals to the primary memory. This network of transmission channels is controlled by a line control module (ILCM) and writes data into the primary memory (dual-port RAM memory (DPR)). This is a memory which has dual data and address connections. The primary memory represents the digital equivalent image of the process information. The primary transmission channels and the ILCM are supplied in various compatible versions. The Intel version was selected for the system described, particularly because of the great flexibility of the multibus arrangement so that several allocation units can be connected.

In theory, one primary transmission channel could sample all conversion facilities but three primary channels (one per 5 conversion units) have been used for reasons of availability and speed.

The highest level are operating/processing units which are connected to the medium-level allocation unit via secondary transmission channels. The operating/processing units are again subdivided into two levels, namely:

1) the batch organization level with a GEC GEM 80 system and

2) the continuous control system with a PMS 20 system.

These are standard systems, the use of which is not determining for the system operation.

The batch organization (the highest level), which was accommodated in a GEC GEM 80 system, is connected to the level below it (PMS 20 by Ferranti) for a continuous control purpose. In a normal configuration, the PMS 20 has a process interface (secondary transmission channel) which is implemented as a PMS 10 slave station.
Four PMS 10 per PMS 20 are provided.
Functionally, however, the PMS 10 slave station is equivalent to the conversion unit of the "System 86". The connection between "System 86" and PMS 20 is effected via a serial interface of the V 24 type.

The matrix computer 18 of the allocation unit is programmed via an operating station with display screen and keyboard. The arrangement of the conversion facilities of the selected PMS 10's is projected on the display screen. The keyboard can be used for connecting channel addresses of the PMS 10 to any desired channel address of the ILCM. Before a final linkage is produced, the necessary checks are performed. If a connection is valid, this can be confirmed and is defined in the $E^2$ PROM so that the contents can no longer be unintentionally deleted but can still be changed.

The system operator effects the connections between the conversion facilities and the operating/processing unit (PMS 20) in this manner. If desired, a signal can be conducted to several operating consoles. A model for a particular process configuration can be defined on diskette. The processor also controls a printer, on which system-oriented reports, amongst others error codes, connection and configuration logs are printed.

Measures for increasing the availability

1. At the level of the operating/processing units

In this case, the "stable balanced-state linkage" concept was used. Availability was additionally increased by accommodating the batch organization and the continuous control in separate modules. In the event of a failure of the batch organization, an external function monitoring facility is activated which takes over the critical safety function and as a result of which the process is kept in a stable balanced state (graceful degradation). However, all corresponding continuous controls continue to function. If the continuous control system fails, the program of the stable balanced state is integrated in the allocation unit (matrix computer hardware).

Selective running-down of a process

Assuming that, in the event of a failure of one of the active operating/processing units, no further unit can be switched on, control and monitoring of one of the processes ceases at that instant. The output signals to the conversion facilities have been kept at the last values and the process will continue to run in this state without the PMS 20 unit being able to carry out corrections in its programs.
To avoid a dangerous condition, a safety system - (stable balanced state) is put into operation under control of the matrix computer. This system brings the process (if necessary sequentially) into a safe state without the process being completely shutdown by means of an emergency shutdown program. This provides the operating personnel with the possibility of starting up a standby operating/processing unit, which resumes control of the process. Production losses can thus be restricted as far as possible. To be able to start up the process again as quickly as possible in the event of a system failure of the continuous control system, a common "cold standby" system is provided.

Secondary memory (SDB) switch-over of the allocation unit

It is assumed that one of the operating/processing units fails and a spare PMS 20 unit is available; then the signals allocated to the defective PMS 20 first have to be allocated to the standby unit. This is quite a complicated action. The allocation unit (MC) is provided with a program which permits switch-over from a particular secondary memory to any other PMS 20.

A monitoring facility prevents the switch-over from a secondary memory via a secondary trans-mission channel to another operating unit when the selec-ted operating unit is already connected via a secondary transmission channel to another secondary memory for another process.

## 2. Allocation unit (matrix computer level (MC))

This is the most critical section of the system. Various processes are running simultaneously. In the event of a failure of one operating unit, only this process is stopped. However, if the allocation unit fails, the entire operation will have to be shutdown. For this reason, this level was designed to be redundant (duplicated).

The messages between MC a and b providing for identical signal configuration of the standby MC and of the master MC are exchanged between the coordinator of the MC processors and the function monitoring facilities via an interprocessor link. The master MC checks via this link whether all system functions in the standby MC are in order, so that automatic or manual switch-over is possible. The PMS 20 unit is not provided with dual channels (for connection to the MC a and b matrix computer). To enable the individual PMS 20 interface (V 24) to be connected to the redundant MC, a special hardware solution was selected, the change-over module.

## 3. Conversion facilities (I/O level)

In the case of the I/O subsystem, a high distribution efficiency has beer built up. All data lines from the I/O subsystem and all interfaces to the conversion facilities have been duplicated. A monitor controlled by the conversion facility checks the standby interface to the second field bus.

The supply for the conversion facilities is duplicated with the possibility of mutual hand-over switching between the supply systems. At the level of conversion facilities, measures were taken which separately brings each conversion facility to a safe state in the case of a disturbance. Such a defect is detected by the on-line diagnostic program of the ILCM and of the MC and may cause particular actions on this conversion facility in dependence on the importance of the signals.

## List of reference designations:

1 Operating/processing unit

2 Function monitoring facility of the operating/processing unit

3 Programmable computer system

4 Secondary transmission channels

5 Switch-over facility

6 Allocation unit

7 Secondary memories

8 Primary memories

9 Function monitoring facility of the allocation unit

10 Function monitoring facility of the secondary memories

11 Programmable element

12 Primary transmission channels

13 Conversion facilities

14 Function monitoring facility of the conversion unit

15 Global manual emergency-off facility

16 Log printer

17 Alarm printer

18 Matrix computer

19 Input/output line

## Claims

1. An apparatus for controlling chemical and physical processes in a plurality of devices suitable for this purpose, which are provided with measuring probes for parameters and actuators for adjusting predetermined parameters. the measuring probes and actuators of a plurality of devices are connected to devices having conversion facilities (13), and the devices having conversion facilities being selectably connected to data processing units comprising programmable computer systems, **characterized in that**

a) a plurality of operating/processing units - (1) is provided,

b) each conversion facility (13) is connected via a primary transmission channel (12) to at least one allocation unit (6), which allocation unit has a primary memory (8) having a plurality of storage elements and several secondary memories (7) having in each case a plurality of storage elements, and

c) each storage element of the primary memory (8) is electrically optionally connected to each storage element of a secondary memory (7), and

d) the secondary memories (7) are connected via secondary transmission channels (4) to one of several operating/processing units (1) in each case so that arbitrary secondary memories (7) can be connected to an arbitrarily selectable operating/processing unit (1).

2. An apparatus as claimed in claim 1, wherein the number of existing operating/processing units - (1) corresponds to the number of secondary memories (7) of the allocation unit (6) and an additional operating/processing unit is also present.

3. An apparatus as claimed in claim 1, wherein allocation units (6) are provided which are disposed in parallel with each other and which are constructed to be optionally connectable to the conversion facilities (13) and to the operating/processing units (1).

4. An apparatus as claimed in claim 1, wherein two allocation units (6) are provided which are disposed in parallel with each other and which are in each case connected to the conversion facilities (13) and are constructed to be optionally connectable to the operating/processing units (1).

5. An apparatus as claimed in each of claims 1 to 4, wherein the secondary transmission channels (4) include a switch-over facility (5) which establishes a connection between the secondary memories (7) of the first allocation unit (6) and selectable operating/processing units (1) and/or enables the connections of the secondary transmission channels (4) to be changed from an allocation unit (6) to a parallel second allocation unit (6).

6. An apparatus as claimed in claim 5, wherein each operating/processing unit (1) has a function monitoring facility (2) which indicates a disturbance within the operating/processing unit (1) and/or the connection to the switch-over facility (5).

7. An apparatus as claimed in claim 1, wherein the allocation units (6) each have a function monitoring facility (9) which indicates a disturbance within the allocation unit (6) and/or the connections to the switch-over facility (5) and/or the conversion facilities (13).

8. An apparatus as claimed in claim 1, wherein the secondary memories (7) of the allocation units - (6) have in each case a function monitoring facility (10) which indicates a disturbance in the connection between secondary memory (6) and the associated operating/processing unit (1) and/or the connection to the primary memory (7).

9. An apparatus as claimed in claim 1, wherein each conversion facility (13) has a function monitoring facility (14) which indicates a disturbance within the conversion facility (13) and/or the connections to the allocation units (6).

10. An apparatus as claimed in claim 1, wherein each operating/processing unit (1) has, in addition to the programmable computer system (3) into which three different control status programs can be entered, a programmable element (11) which is independent of this computer system and into which two different control status programs can be entered and which can be connected to the associated secondary transmission channel (4) in the event of a failure of the computer system (3).

11. An apparatus as claimed in claim 1, wherein the primary memory (8) is connected to the secondary memories (7) within the allocation unit (6) by one programmable element (18) in each case which establishes the allocation of the storage elements of the primary memory (8) to the storage elements of the secondary memories (7).

12. An apparatus as claimed in claim 11, wherein the programmable element (18) or a programmable element (11) within the allocation unit - (6) in each case, apart from a through connection from the secondary transmission channels (4) to the secondary memories (7), enables two different control status programs to be entered which can be switched to the secondary memories (7).

13. A method for controlling chemical and physical processes in a plurality of devices suitable for this purpose in which signals emitted by measuring probes are transmitted via transmission channels to operating/processing units, compared with predetermined setpoint programs in the computer system of the operating/processing units and control commands resulting from deviation or subsequent program steps are transmitted via transmission channels to the actuators of the connected devices,

wherein in the programmable computer system of each operation/processing unit different control state programs for the sequence program, desired in each case, of the chemical and/or physical processes, are stored, namely

a) the normal process sequence program - (PR);

b) a stable balanced state (SB), from which a return into the normal process sequence program is possible, for each process state in time in the process,

c) an interruption/emergency shutdown program (SD) are entered in the programmable computer system of each operating/processing unit,

wherein the programs for the control state of the stable balanced state and the interruption program are additionally stored in a programmable element independent of the computer system, and

i) when a function monitoring unit of an operating/processing unit with indication of the failure of the computer system of this operating/processing unit or of the failure of the data transmission from this operating/processing unit to the connected secondary memory of the allocation unit, due to a switch-over process

d) a connection between the independent programmable element and the associated storage element of a primary memory is established,

e) a change of the control state from the normal process state into that of the stable balanced state is triggered by the independent programmable element and the required control signals are supplied to the actuators,

ii) when a function monitoring unit of a secondary memory responds due to a switch-over process

f) the connections of the allocation unit to the secondary transmission channels and the primary transmission channels leading to the conversion facilities are separated and

g) a connection is established between a second allocation unit and the corresponding primary transmission channels and secondary transmission channels by a switch-over process, or

h) the connections between a disturbed secondary memory and the associated, possibly disturbed programmable element and the secondary transmission channel and the primary memory disposed in the allocation unit are separated by a switch-over process and in each case a connection is established between the secondary transmission channel and the primary memory and a free secondary memory of the same allocation unit, and

k) the program, stored in the computer system of the operating/processing unit connected via the secondary transmission channel, for the control state of the stable balanced state and the interruption program, are additionally stored in the associated independent programmable element,

iii) when the function monitoring unit of the allocation unit responds due to a switch-over process,

l) the connections of the allocation unit to the secondary transmission channels and the primary transmission channels leading to the conversion facilities are separated and

m) a connection is established between a second allocation unit and the corresponding primary transmission channels and secondary transmission channels and

n) the program, stored in the computer system of the operating/processing unit connected via the secondary transmission channel, for the control state of the stable balanced state and the interruption program, are stored in the associated independent programmable element,

iv) when the function monitoring facility of a conversion facility connected to the primary memory via a primary transmission channel responds and the data transmission from the associated memory element of the primary memory to the conversion facility fails due to a switch-over process

o) within the conversion facility a change of the control state program to the program of the process interruption and the emergency shutdown of the connected devices is effected.

14. A method as claimed in claim 13, wherein the addional storage of the programs, stored in the programmable computer system of an operating/processing unit, for the control state of the stable balanced state and the interruption program is disposed into programmable elements of secondary memories disposed in an allocation unit and being connected via secondary transmis sion channels, and in the event of a failure of the data transmission from an operating/processing unit to the connected secondary memory, the through connection from the secondary transmission channel to the secondary memory is separated by a switch-over process and a connection is established from the control states entered in an associated programmable element of the secondary memory to the associated storage element of a primary memory.

Abb. 1

Abb. 2

5

7

Matrix 18

8

12

8

13

1
1
1
1

9
6
7

Matrix 18

12

12

12

0 232 807

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 112 766 (RHEINISCHE COMPUTER) * Claims 1,2,5 * | 1 | G 06 F 15/46 G 05 B 9/03 G 06 F 11/20 |
| | --- | | |
| A | ADVANCES IN INSTRUMENTATION, vol. 39, Part 2, 22nd-25th October 1984, pages 1193-1211, ISA, Research Triangle Park, NC, US; Y. WAKASA et al.: "User-configurable fault-tolerant architecture for a distributed control system" * Page 1194, line 5 - page 1196, line 45; figure 5 * | 1 | |
| | --- | | |
| A | REGELUNGSTECHNISCHE PRAXIS, vol. 22, no. 3, March 1980, pages 73-81, München, DE; W. SENDLER: "Eine fehlertolerierende Reglerstation auf der Basis eines busorientierten Multi-Mikrorechner-Systems" * Page 77, line 1 - page 78, line 12; figure 4 * | 1 | **TECHNICAL FIELDS SEARCHED (Int. Cl.4)** G 05 B G 06 F |
| | --- | | |
| A | BROWN BOVERI REVIEW, vol. 71, no. 8, August 1984, pages 324-326, Baden, CH; R. BACHMANN et al.: "Electronic systems for power plants" * Whole document * | 1 | |
| | ----- | | |

The present search report has been drawn up for all claims

| Place of search | Date of completion of the search | Examiner |
|---|---|---|
| THE HAGUE | 08-05-1987 | KOLBE W.H. |